# EUROPÄISCHE PATENTSCHRIFT

(11) **EP 3 105 002 B1**
(45) Veröffentlichungstag und Bekanntmachung des Hinweises auf die Patenterteilung: **17.10.2018**
(21) Anmeldenummer: 15700872.3
(22) Anmeldetag: 21.01.2015
(51) Int. Cl.: B23K 26/03, B23K 26/26, F16B 5/06, F16B 5/08

(54) **VERFAHREN ZUM ERZEUGEN EINER LASERSCHWEISSNAHT ZWISCHEN BAUTEILEN MIT EINEM KUGELIGEN ODER KUGELÄHNLICHEN ELEMENT**
METHOD OF PRODUCING A LASER WELD SEAM BETWEEN COMPONENTS BY MEANS OF A SPHERICAL OR SPHERE-LIKE ELEMENT
PROCÉDÉ DE RÉALISATION D'UN CORDON DE SOUDURE PAR LASER ENTRE DES ÉLÉMENTS COMPRENANT UN ÉLÉMENT SPHÉRIQUE OU SPHÉROÏDE

(30) Priorität: 13.02.2014 DE 102014202636
(43) Veröffentlichungstag der Anmeldung: 21.12.2016
(73) Patentinhaber: Bayerische Motoren Werke Aktiengesellschaft, 80809 München (DE)
(72) Erfinder: LANGRIEGER, Hans, 80634 München (DE); NIEKERK, Johann van, 80993 München (DE)
(86) Internationale Anmeldenummer: PCT/EP2015/051078
(87) Internationale Veröffentlichungsnummer: WO 2015/121030

(56) Entgegenhaltungen:
- WO-A1-2013/159982
- CN-A- 103 317 241
- DE-A1-102011 079 483
- JP-A- 2007 310 968

## Beschreibung

Die vorliegende Erfindung betrifft ein Verfahren zum Erzeugen einer Schweißnaht gemäß dem Oberbegriff des Patentanspruches 1.

Ein Verfahren gemäß dem Oberbegriff des Patentanspruches 1 ist aus der WO 2013/159982 A1 bekannt. Zum technischen Hintergrund der Erfindung zählen die JP 2007 310968 A, CN 103317241 A sowie die DE 10 2011 079 483 A1.

Aus der DE 10 2010 028 322 A1 ist ein Verfahren zum Verbinden eines ersten Fahrzeugbauteils mit einem zweiten Fahrzeugbauteil bekannt. Dabei werden zunächst die beiden Fahrzeugbauteile zusammengesteckt. Hierzu ist an einem der beiden Fahrzeugbauteile eine Kugel angebracht, die in ein in dem anderen Fahrzeugbauteil vorgesehenes Loch klemmend eingesteckt wird. Nach dem Zusammenstecken der beiden Fahrzeugbauteile werden diese verschweißt. "Kugelverbindungen", wie sie in der oben genannten DE 10 2010 028 322 A1 beschrieben sind, eröffnen vielfältige Anwendungsmöglichkeiten für das Vorfixieren bzw. Verbinden von Bauteilen. Aufgabe der Erfindung ist es, ein Verfahren anzugeben, mit dem weitere Eigenschaften kugeliger oder kugelähnlicher Elemente vorteilhaft genutzt werden können.
Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zum Erzeugen einer Schweißnaht auf oder an einem ersten Bauteil oder im Bereich eines ersten Bauteils, von dem mindestens ein kugeliges oder kugelähnliches Element absteht. Das kugelige Element kann z.B. eine "Einzelkugel" sein, die unmittelbar auf einer Oberseite des ersten Bauteils angeordnet (z.B. aufgeschweißt) ist oder die über ein Verbindungselement mit dem ersten Bauteil verbunden ist. Alternativ zu einem Element, welches durch ein einzelnes kugeliges oder kugelähnliches Element gebildet ist oder welches nur ein einzelnes kugeliges oder kugelähnliches Element aufweist, kann von dem ersten Bauteil auch ein Element abstehen, welches mehrere kugelige oder kugelähnliche Elemente aufweist. Beispielsweise könnte von dem ersten Bauteil ein Element abstehen, welches zwei kugelige Elemente aufweist, die z.B. unmittelbar miteinander verbunden sein können oder über ein Abstandselement (ähnlich wie bei einer Hantel). Zusammenfassend sei erwähnt, dass die Erfindung nicht auf ein bestimmtes kugeliges oder kugelähnliches Element beschränkt ist. Wesentlich ist, dass von dem ersten Bauteil ein Element absteht, welches mindestens ein kugeliges oder kugelähnliches Element aufweist oder durch ein solches gebildet ist.

Ausgangspunkt der Erfindung ist die Tatsache, dass bei einem Auftreffen eines Lichtstrahls auf die Oberfläche eines kugeligen Elements ganz allgemein "Einfallswinkel ist gleich Ausfallswinkel" gilt. Ein Lichtstrahl, der senkrecht auf einen Oberflächenpunkt des kugeligen oder kugelähnlichen Elements auftrifft, wird "in sich" reflektiert wird, was im Folgenden als "Totalreflexion" bezeichnet wird. Wird ein Lichtstrahl "totalreflektiert", so läuft der reflektierte Lichtstrahl auf derselben "Bahn" zurück wie der "Ausgangslichtstrahl.

Diese Eigenschaften kugeliger oder kugelähnlicher Elemente ermöglichen es, ein kugeliges oder kugelähnliches Element sehr einfach als (Positions-)Markierung für weitere Fertigungsschritte, insbesondere zum Festlegen der Position einer Schweißnaht auf oder an dem ersten Bauteil oder im Bereich des ersten Bauteils, zu nutzen.

Gemäß der Erfindung werden mittels einer optoelektronischen Detektionseinrichtung die Position des mindestens einen kugeligen oder kugelähnlichen Elements detektiert und entsprechende Positionsdaten erzeugt.

Anschließend wird auf oder an dem ersten Bauteil oder im Bereich des ersten Bauteils berührungsfrei mittels einer entfernt von dem ersten Bauteil und dem mindestens einen kugeligen oder kugelähnlichen Element angeordneten, elektronisch gesteuerten Laserschweißvorrichtung die Schweißnaht erzeugt. Die (Positions-)Steuerung der Schweißvorrichtung erfolgt erfindungsgemäß auf Basis oder unter Verwendung der Positionsdaten des kugeligen oder kugelähnlichen Elements. Die zu erzeugende Schweißnaht (Schweißfigur) wird also relativ zur Position des kugeligen oder kugelähnlichen Elements erzeugt. Beispielsweise kann vorgesehen sein, dass die Schweißnaht entsprechend einem Kreisring erzeugt wird, wobei sich das kugelige oder kugelähnliche Element im Mittelpunkt des Kreisrings befindet. Denkbar sind natürlich auch beliebige anders gestaltete "Schweißfiguren".

Nach einer Weiterbildung der Erfindung weist die optoelektronische Detektionseinrichtung eine Lichtquelle (z.B. Laserlichtquelle), eine Sensoreinrichtung und eine Optik auf. Von der Lichtquelle erzeugte Lichtstrahlen werden mittels der Optik, welche eine Spiegel- und / oder Linsenanordnung umfassen kann, auf die Oberfläche des mindestens einen kugeligen oder kugelähnlichen Elements projiziert, Die auf die Oberfläche des kugeligen oder kugelähnlichen Elements auftreffenden Lichtstrahlen werden dort reflektiert. Zumindest ein Teil der reflektierten Lichtstrahlen wird über die Optik zu der Sensoreinrichtung geleitet.

Nach einer Weiterbildung der Erfindung wird mittels der Detektionseinrichtung ein (Laser-)Lichtstrahl erzeugt, der senkrecht auf einen Oberflächenpunkt des mindestens einen kugeligen oder kugelähnlichen Elements projiziert, dort totalreflektiert und über die Optik zur Sensoreinrichtung geleitet wird.

Gemäß der Erfindung wird mittels der Detektionseinrichtung ein ganzes Lichtstrahlenbündel erzeugt. Mittels der Sensoreinrichtung und einer Auswerteelektronik wird detektiert, welcher Lichtstrahl des Lichtstrahlenbündels an der Oberfläche des kugeligen oder kugelähnlichen Elements total reflektiert wird.

Es kann vorgesehen sein, dass die Sensoreinrichtung ein durch eine Vielzahl von Einzelsensoren gebildetes Sensor-Array (Sensorfeld) aufweist. Mittels des den totalreflektierten Lichtstrahl detektierenden Einzelsensors des Sensorfelds kann der Verlauf des totalreflektierten Lichtstrahls ermittelt werden. Aus dem Verlauf, insbesondere aus dem Richtungsvektor des an der Oberfläche des kugeligen oder kugelähnlichen Elements totalreflektierten Lichtstrahls werden gemäß der Erfindung Positionsdaten des mindestens einen kugeligen oder kugelähnlichen Elements abgeleitet.

Sofern es sich bei dem Element um eine echte Kugel handelt, kann aus dem Richtungsvektor des totalreflektierten Lichtstrahls abgeleitet werden, dass der Mittelpunkt des kugeligen Elements auf "der Verlängerung" des totalreflektierten Lichtstrahls liegen muss.

Aus dem Verlauf des totalreflektierten Lichtstrahls bzw. den vektoriellen Komponenten des totalreflektierten Lichtstrahls und einem vorgegebenen oder mittels einer Mess- bzw. Detektionseinrichtung gemessenen Durchmessers des mindestens einen kugeligen oder kugelähnlichen Elements kann die Position des mindestens einen kugeligen oder kugelähnlichen Elements, insbesondere die Position des Mittelpunkts des kugeligen oder kugelähnlichen Elements und/oder ein Aufstandspunkt des kugeligen oder kugelähnlichen Elements auf dem ersten Bauteil ermittelt werden.

Nach einer Weiterbildung der Erfindung wird ein zweites Bauteil bereitgestellt, welches ein Durchgangsloch aufweist. Das zweite Bauteil wird so auf das erste Bauteil aufgesetzt, dass das mindestens eine von dem ersten Bauteil abstehende kugelige oder kugelähnliche Element durch das Durchgangsloch hindurch ragt und auf der dem ersten Bauteil abgewandten Seite des zweiten Bauteils aus dem zweiten Bauteil heraus steht.

Nach einer Weiterbildung der Erfindung werden die beiden Bauteile durch die Schweißnaht miteinander verschweißt. Ferner kann vorgesehen sein, dass die Schweißnaht unmittelbar im Bereich des kugeligen oder kugelähnlichen Elements erzeugt wird. Die beiden Bauteile können somit unmittelbar über die Schweißnaht und/oder mittelbar über das kugelige oder kugelähnliche Element miteinander stoffschlüssig dauerhaft fest verbunden werden.

Im Folgenden wird die Erfindung im Zusammenhang mit der Zeichnung näher erläutert. Es zeigen:
- Fig. 1: ein Ausführungsbeispiel gemäß der Erfindung in schematischer Darstellung;
- Fig. 2: ein weiteres Ausführungsbeispiel gemäß der Erfindung; und
- Fig. 3: das Prinzip der Detektierung des totalreflektierten Lichtstrahls.

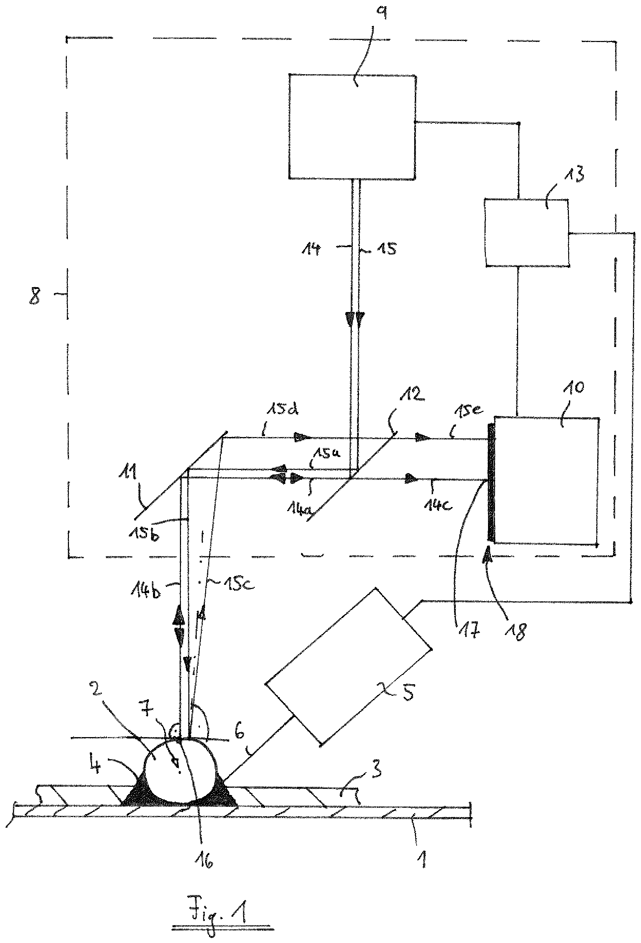

Fig. 1 zeigt ein erstes, durch ein Blech (z.B. Stahlblech oder Aluminiumblech) gebildetes Bauteil 1, von dessen Oberseite eine Kugel 2 absteht. Bei der Kugel 2 kann es sich bspw. um eine Stahlkugel oder um eine Aluminiumkugel handeln. Die Kugel 2 kann z.B. durch eine Punktschweißung oder in anderer Weise mit dem Blech 1 verbunden sein.

Auf das Blech 1 ist ein zweites Bauteil 3 aufgesetzt, das hier ebenfalls durch ein Blech gebildet ist. Das zweite Bauteil 3 weist ein Durchgangsloch auf, das zumindest so groß ist, dass das zweite Blech mit seinem Durchgangsloch auf die Kugel 2 z.B. klemmend, aufgesetzt werden kann. Das Durchgangsloch ist in der in Fig. 1 gezeigten Darstellung nicht mehr zu erkennen, da die beiden Bauteile 1, 3 über die Kugel 2 bzw. eine die Kugel 2 ringförmig umschließende Schweißnaht 4 miteinander verschweißt sind, welche das Durchgangsloch nicht mehr erkennen lässt.

Die Schweißnaht 4 wurde berührungsfrei mittels einer entfernt von dem ersten Bauteil 1 und dem kugeligen Element 2 angeordneten, elektronisch gesteuerten Laserschweißvorrichtung 5 erzeugt. Die Laserschweißvorrichtung 5 erzeugt einen Laserstrahl 6, welcher Material des ersten Bauteils 1 und / oder des zweiten Bauteils 3 und / oder der Kugel 2 aufschmilzt, wodurch die beiden Bauteile 1, 3 und die Kugel 2 miteinander verschweißt werden.

Die Laserschweißvorrichtung kann zum Erzeugen einer die Kugel 2 ringförmig umschließenden Schweißnaht bspw. mittels eines Schweißroboters elektronisch gesteuert um die Kugel 2 "herumgeführt" werden. Die Steuerung der Laserschweißvorrichtung bzw. des die Laserschweißvorrichtung aufnehmenden oder haltenden Roboters (nicht dargestellt) erfolgt auf Basis oder unter Verwendung der Positionsdaten des kugeligen oder kugelähnlichen Elements 2, z.B. auf Basis oder unter Verwendung der Lage des Mittelpunkts 7 der Kugel 2 im Raum und / oder relativ zu dem ersten und / oder zweiten Bauteil 1 bzw. 3.

Die Positionsdaten der Kugel 2 werden mittels einer optoelektronischen Detektionseinrichtung 8 detektiert. Die optoelektronische Detektionseinrichtung 8 weist eine Laserlichtquelle 9, eine Sensoreinrichtung 10 und eine Optik auf, die hier durch einen ersten Spiegel 11 und einen einseitig reflektierenden, semitransparenten Spiegel 12 gebildet ist.

Die Laserlichtquelle 9 und die Sensoreinrichtung 10 sind elektrisch an eine Auswerteelektronik 13 angeschlossen, welche die Positionsdaten erzeugt. Ebenfalls an die Auswerteelektronik angeschlossen ist die Lasereinrichtung 5, welche, wie bereits erwähnt, auf Basis oder unter Verwendung der Positionsdaten des kugeligen oder kugelähnlichen Elements 2 die Laserschweißvorrichtung 5 steuert.

Die Laserlichtquelle 9 erzeugt Lichtstrahlen 14, 15. Es kann auch vorgesehen sein, dass die Laserlichtquelle 9 ein ganzes Bündel, d.h. eine Vielzahl von Lichtstrahlen, insbesondere von parallelen Lichtstrahlen erzeugt.

Im Folgenden wird die Erfindung im Zusammenhang mit lediglich den beiden Lichtstrahlen 14, 15 näher erläutert.

Wie aus dem Strahlengang ersichtlich ist, wird der Lichtstrahl 14 an dem Spiegel 12 reflektiert. Der reflektierte Lichtstrahl 14a wird erneut an dem Spiegel 11 reflektiert und trifft als Lichtstrahl 14b senkrecht auf einen Oberflächenpunkt 16 der Kugel 2 auf. Im Oberflächenpunkt 16 wird der Lichtstrahl 14b totalreflektiert, d.h. der reflektierte Lichtstrahl 16 ist hinsichtlich seines Richtungsvektors identisch mit dem von dem Spiegel 11 kommenden Lichtstrahl 14b. Der reflektierte Lichtstrahl 14b wird am Spiegel 11 zurückreflektiert. Zumindest ein Teil des zurückreflektierten Lichtstrahls 14a geht durch den Spiegel 12 hindurch und trifft als Lichtstrahl 14c auf einen Einzelsensor 17 eines Sensorfeldes 18 der Sensoreinrichtung 10 auf. Mittels der Auswerteelektronik 13 wird ermittelt, dass es sich bei dem zurückreflektierten Lichtstrahl 14c um einen totalreflektierten Lichtstrahl handeln muss. Hieraus kann abgeleitet werden, dass der Mittelpunkt 7 der Kugel 2 auf einer "Verlängerung" des Lichtstrahls 14b liegen muss. Kennt man den Durchmesser der Kugel 2 bzw. ist der Durchmesser der Kugel 2 vorgegeben, so kann aus den Positionsdaten des Oberflächenpunkts 16, dem Richtungsvektor des Lichtstrahls 14b und dem Durchmesser der Kugel 2 die Lage des Mittelpunkts 7 der Kugel 2 ermittelt werden.

Es ist leicht ersichtlich, dass von einem Bündel paralleler Lichtstrahlen, welches von der Laserlichtquelle 9 erzeugt wird, genau ein Lichtstrahl, nämlich der Lichtstrahl 14, 14a, 14b, 14c) totalreflektiert wird.

Betrachtet man bspw. den nur geringfügig seitlich versetzt zu dem Lichtstrahl 14 verlaufenden parallelen Lichtstrahl 15 und verfolgt dessen Strahlengang 15a, 15b, 15c, 15d, 15e, so ist ersichtlich, dass dieser gerade nicht totalreflektiert wird. Vielmehr ist es so, dass entsprechend den Gesetzen der Optik (Einfallswinkel ist gleich Ausfallswinkel) der Lichtstrahl 15d als Lichtstrahl 15c zurückreflektiert wird.

Prinzipiell könnte man die Positionsdaten der Kugel 2 auch aus dem Abstand der Lichtstrahlen 15a und 15d dem Richtungsvektor der Winkelhalbierenden zwischen den Lichtstrahlen 15b, 15c ermitteln. Besonders einfach lassen sich jedoch Positionsdaten generieren, wenn man hierfür den totalreflektierten Lichtstrahl 14, 14a, 14b, 14c verwendet.

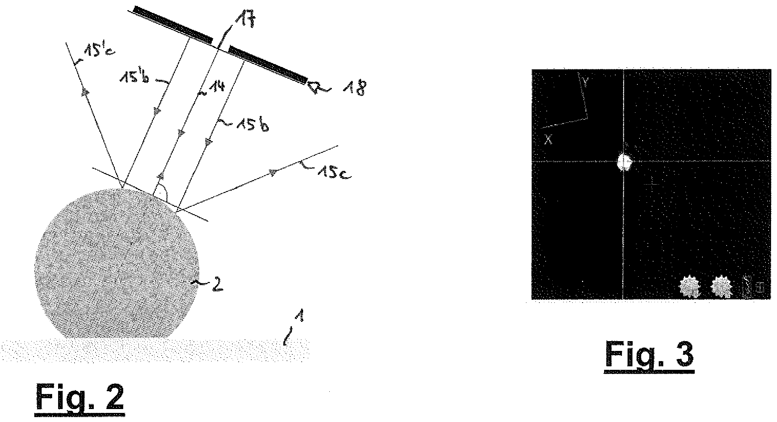

Bei dem in Fig. 2 gezeigten Ausführungsbeispiel wird auf die Kugel 2 ein Bündel von Lichtstrahlen 14, 15b und 15'b projiziert. Von diesen Lichtstrahlen wird der Lichtstrahl 14 totalreflektiert. Der totalreflektierte Lichtstrahl 14 beleuchtet einen "punkfförmigen Bereich" (Einzelsensor 17) des Sensorfelds 18. Die anderen Lichtstrahlen 15b und 15'b des Bündels von Lichtstrahlen 14, 15b und 15'b werden gemäß dem Prinzip "Einfallswinkel gleich Ausfallswinkel" von der Kugel 2 an dem Sensorfeld 18 vorbei reflektiert, d.h. sie treffen gar nicht auf das Sensorfeld 18 auf.

Wie in Fig. 3 dargestellt ist, braucht also in dem Sensorfeld 18 lediglich "der beleuchtete punktförmige Bereich" bzw. der "helle Fleck", oder, genauer gesagt, der Mittelpunkt oder das Zentrum des hellsten Flecks, gesucht werden, um identifizieren zu können, welcher Lichtstrahl (Lichtstrahl 14) eines Bündels von Lichtstrahlen 14, 15b und 15'b totalreflektiert wird. Durch Suchen des Zentrums (in Fig. 3 Lage des Fadenkreuzes) des hellsten Flecks auf dem Sensorfeld 18 kann der Strahlengang des totalreflektierten Lichtstrahls 14 sehr präzise ermittelt werden. Versuche haben gezeigt, das bei der Beleuchtung einer Kugel 2 mit einem Bündel paralleler Lichtstrahlen 14, 15b und 15'b sich auf dem Sensorfeld 18 aufgrund der besonderen Reflexionseigenschaften einer Kugel ganz dezidiert ein optoelektronisch sehr präzise erfassbarer "Bereich größer Helligkeit" (heller Fleck bzw. Position des Einzelsensors 17) ausbildet.

Aus dem Strahlengang des totalreflektierten Lichtstrahls 14 wiederum können die Positionsdaten der Kugel 2 ermittelt werden, welche in die Steuerung bzw. Regelung der Schweißvorrichtung eingehen.

Die Steuerung bzw. Regelung erfolgt also auf Basis der durch das Sensorfeld 18 gebildeten "Graubildaufnahme", welche genau einen punktförmigen Bereich höchster Helligkeit und ansonsten im Wesentlichen unbelichtete Bereiche aufweist. Dies ist mit geringem steuerungs- bzw. regelungstechnischem Aufwand möglich.

## Patentansprüche

1. Verfahren zum Erzeugen einer Schweißnaht (4) auf oder an einem ersten Bauteil (1) oder im Bereich eines ersten Bauteils (1), von dem mindestens ein kugeliges oder kugelähnliches Element (2) absteht, **dadurch gekennzeichnet, dass**
- mittels einer optoelektronischen Detektionseinrichtung (8) die Position des mindestens einen kugeligen oder kugelähnlichen Elements (2) detektiert wird und entsprechende Positionsdaten erzeugt werden und
- berührungsfrei mittels einer entfernt von dem ersten Bauteil (1) und dem mindestens einen kugeligen oder kugelähnlichen Element (2) angeordneten, elektronisch gesteuerten Laserschweißvorrichtung (5) die Schweißnaht (4) erzeugt wird, wobei die Steuerung der Laserschweißvorrichtung (5) auf Basis oder unter Verwendung der Positionsdaten des kugeligen oder kugelähnlichen Elements (2) erfolgt.

2. Verfahren nach Anspruch 1, **dadurch gekennzeichnet, dass** die optoelektronische Detektionseinrichtung (8) eine Lichtquelle (9), eine Sensoreinrichtung (10) und eine Optik (11, 12) aufweist, wobei von der Lichtquelle (9) erzeugte Lichtstrahlen (14, 15) mittels der Optik (11, 12) auf die Oberfläche des mindestens einen kugeligen oder kugelähnlichen Elements (2) projiziert, dort reflektiert und über die Optik (11, 12) zur Sensoreinrichtung (10) geleitet werden.

3. Verfahren nach einem der Ansprüche 1 oder 2, **dadurch gekennzeichnet, dass** mittels der Detektionseinrichtung (8) ein Lichtstrahl (14b) erzeugt wird, der senkrecht auf einen Oberflächenpunkt (16) des mindestens einen kugeligen oder kugelähnlichen Elements (2) projiziert, dort totalreflektiert und über die Optik (11, 12) zur Sensoreinrichtung (10) geleitet wird.

4. Verfahren nach einem der Ansprüche 1 bis 3, **dadurch gekennzeichnet, dass** mittels der Detektionseinrichtung (8) ein Lichtstrahlenbündel (14, 15) erzeugt wird, wobei mittels der Sensoreinrichtung (10) und einer Auswerteelektronik (13) detektiert wird, welcher Lichtstrahl (14) des Lichtstrahlenbündels (14, 15) in sich reflektiert wird.

5. Verfahren nach einem der Ansprüche 1 bis 4, **dadurch gekennzeichnet, dass** die Sensoreinrichtung (10) ein durch eine Vielzahl von Einzelsensoren (17) gebildetes Sensorfeld (18) aufweist, wobei der totalreflektierte Lichtstrahl identifiziert wird, indem in dem Sensorfeld (18) die Position, insbesondere das Zentrum, des hellsten Bereichs oder Flecks detektiert wird.

6. Verfahren nach Anspruch 5, **dadurch gekennzeichnet, dass** mittels des den in sich reflektierten Lichtstrahl (14) detektierenden Einzelsensors (17) ein vektorieller Verlauf des in sich reflektierten Lichtstrahls (14) ermittelt wird.

7. Verfahren nach Anspruch 6, **dadurch gekennzeichnet, dass** aus dem vektoriellen Verlauf des in sich reflektierten Lichtstrahls (14) Positionsdaten (7) des mindestens einen kugeligen oder kugelähnlichen Elements (2) abgeleitet oder erzeugt werden.

8. Verfahren nach einem der Ansprüche bis 7, **dadurch gekennzeichnet, dass** aus dem vektoriellen Verlauf des in sich reflektierten Lichtstrahls (14) und einem vorgegebenen oder mittels der Detektionseinrichtung gemessenen Durchmessers des mindestens einen kugeligen oder kugelähnlichen Elements (2) eine Position des mindestens einen kugeligen oder kugelähnlichen Elements (2) detektiert wird.

9. Verfahren nach einem der Ansprüche 1 bis 8, **dadurch gekennzeichnet, dass** ein zweites Bauteil (3) bereitgestellt wird, welches ein Durchgangsloch aufweist, wobei das zweite Bauteil (3) so auf das erste Bauteil (1) aufgesetzt wird, dass das mindestens eine von dem ersten Bauteil (1) abstehende kugelige oder kugelähnliche Element (2) durch das Durchgangsloch hindurch ragt und auf der dem ersten Bauteil (1) abgewandten Seite des zweiten Bauteils (3) aus dem zweiten Bauteil heraus steht.

10. Verfahren nach Anspruch 9, **dadurch gekennzeichnet, dass** die beiden Bauteile (1, 3) durch die Schweißnaht (4) miteinander verschweißt werden.

11. Verfahren nach einem der Ansprüche 1 bis 10, **dadurch gekennzeichnet, dass** die Schweißnaht (4) unmittelbar im Bereich des kugeligen oder kugelähnlichen Elements (2) erzeugt wird.

12. Verfahren nach einem der Ansprüche 1 bis 11, **dadurch gekennzeichnet, dass** die Schweißnaht (4) so erzeugt wird, dass sie das kugelige oder kugelähnliche Element (2) ringartig umschließt.

## Claims

1. A method for producing a weld seam (4) on or at a first component (1) or in the region of a first component (1), from which at least one spherical or sphere-like element (2) projects,
**characterised in that**
- by means of an optoelectronic detection means (8), the position of the at least one spherical or sphere-like element (2) is detected and corresponding position data are produced, and
- the weld seam (4) is produced in contact-free manner by means of an electronically controlled laser welding device (5) arranged at a distance from the first component (1) and the at least one spherical or sphere-like element (2), the laser welding device (5) being controlled on the basis of or using the position data of the spherical or sphere-like element (2).

2. A method according to Claim 1, **characterised in that** the optoelectronic detection means (8) has a light source (9), a sensor means (10) and an optical system (11, 12), with light beams (14, 15) generated by the light source (9) being projected by means of the optical system (11, 12) onto the surface of the at least one spherical or sphere-like element (2), reflected there and guided via the optical system (11, 12) to the sensor means (10).

3. A method according to one of Claims 1 or 2, **characterised in that** a light ray (14b) is generated by means of the detection means (8), which ray is projected perpendicularly onto a surface point (16) of the at least one spherical or sphere-like element (2), is totally reflected there and is guided via the optical system (11, 12) to the sensor means (10).

4. A method according to one of Claims 1 to 3, **characterised in that** a light ray beam (14, 15) is generated by means of the detection means (8), it being detected by means of the sensor means (10) and evaluation electronics (13) which light ray (14) of the light ray beam (14, 15) is reflected onto itself.

5. A method according to one of Claims 1 to 4, **characterised in that** the sensor means (10) has a sensor field (18) formed by a large number of individual sensors (17), the totally reflected light ray being identified **in that** the position, especially the centre, of the brightest region or spot is detected in the sensor field (18).

6. A method according to Claim 5, **characterised in that** a vectorial path of the light ray (14) which is reflected onto itself is ascertained by means of the individual sensor (17) which detects the light ray (14) which is reflected onto itself.

7. A method according to Claim 6, **characterised in that** position data (7) of the at least one spherical or sphere-like element (2) is derived or generated from the vectorial path of the light ray (14) which is reflected onto itself.

8. A method according to Claim 7, **characterised in that** a position of the at least one spherical or sphere-like element (2) is detected from the vectorial path of the light ray (14) which is reflected onto itself and a specified diameter, or a diameter which is measured by means of the detection means, of the at least one spherical or sphere-like element (2).

9. A method according to one of Claims 1 to 8, **characterised in that** a second component (3) is provided, which has a through-hole, the second component (3) being placed on the first component (1) such that the at least one spherical or sphere-like element (2) which projects from the first component (1) protrudes through the through-hole and protrudes from the second component on that side of the second component (3) which is remote from the first component (1).

10. A method according to Claim 9, **characterised in that** the two components (1, 3) are welded together by the weld seam (4).

11. A method according to one of Claims 1 to 10, **characterised in that** the weld seam (4) is produced directly in the region of the spherical or sphere-like element (2).

12. A method according to one of Claims 1 to 11, **characterised in that** the weld seam (4) is produced such that it surrounds the spherical or sphere-like element (2) in ring-like manner.

## Revendications

1. Procédé d'obtention d'un cordon de soudure (4) sur ou contre un premier composant (1) ou dans la zone d'un premier composant (1) duquel dépasse au moins un élément sphérique ou sphéroïde (2), **caractérisé en ce qu'**
- au moyen d'un dispositif de détection optoélectronique (8), la position de l'élément sphérique ou sphéroïde (2) est détectée et des données de position correspondantes sont obtenues, et
- le cordon de soudure (4) est obtenu sans contact à l'aide d'un dispositif de soudage laser (5) à commande électronique situé à distance du premier composant (1) et de l'élément sphérique ou sphéroïde (2), la commande du dispositif de soudage laser (5) s'effectuant sur le fondement ou en utilisant les données de position de l'élément sphérique ou sphéroïde (2).

2. Procédé conforme à la revendication 1,
**caractérisé en ce que**
le dispositif de détection optoélectronique (8) comporte une source de lumière (9), un dispositif de capteur (10) et un système optique (11, 12), les rayons lumineux (14, 15) émis par la source de lumière (9) étant projetés au moyen du système optique (11, 12) sur la surface de l'élément sphérique ou sphéroïde (2), y étant réfléchis et étant transférés par l'intermédiaire du système optique (11, 12) vers le dispositif de capteur (10).

3. Procédé conforme à l'une des revendications 1 et 2,
**caractérisé en ce que**
le dispositif de détection (8) permet d'obtenir un rayon lumineux (14b) qui est projeté perpendiculairement sur un point (16) de la surface de l'élément sphérique ou sphéroïde (2), y est totalement réfléchi et est transféré vers le dispositif de capteur (10) par l'intermédiaire du système optique (11, 12).

4. Procédé conforme à l'une des revendications 1 à 3,
**caractérisé en ce que**
le dispositif de détection (8) permet d'obtenir un faisceau de rayons lumineux (14, 15), le dispositif de capteur (10) et une électronique d'exploitation (13) permettant de détecter quel rayon lumineux (14) du faisceau de rayons lumineux (14, 15) est réfléchi sur lui-même.

5. Procédé conforme à l'une des revendications 1 à 4,
**caractérisé en ce que**
le dispositif de capteur (10) comporte un champ de capteurs (18) formé par un ensemble de capteurs indépendants (17), le rayon lumineux totalement réfléchi étant identifié en détectant, dans le champ de capteurs (18), la position en particulier le centre de la zone de la tâche la plus claire.

6. Procédé conforme à la revendication 5,
**caractérisé en ce que**
le capteur indépendant (17) détectant le rayon lumineux réfléchi sur lui-même (14), permet de déterminer le tracé vectoriel de ce rayon lumineux (14) réfléchi sur lui-même.

7. Procédé conforme à la revendication 6,
**caractérisé en ce que**
le tracé vectoriel du rayon lumineux (14) réfléchi sur lui-même, permet de déduire ou d'obtenir des données de position (7) de l'élément sphérique ou sphéroïde (2).

8. Procédé conforme à l'une des revendications 1 à 7,
**caractérisé en ce que**
le tracé vectoriel du rayon lumineux (14) réfléchi sur lui-même, et le diamètre prédéfini ou mesuré au moyen du dispositif de capteur de l'élément sphérique ou sphéroïde (2) permettent de détecter la position de l'élément sphérique ou sphéroïde (2).

9. Procédé conforme à l'une des revendications 1 à 8,
**caractérisé en ce que**
l'on prépare un second composant (3) qui comporte un perçage traversant, le second composant (3) étant positionné sur le premier composant (1) de sorte que l'élément sphérique ou sphéroïde (2) dépassant du premier composant (1) pénètre au travers du perçage traversant et sorte du second composant (3) sur le côté de ce second composant situé à l'opposé du premier composant (1).

10. Procédé conforme à la revendication 9,
**caractérisé en ce que**
les deux composants (1, 3) sont soudés l'un à l'autre par le cordon de soudure (4).

11. Procédé conforme à l'une des revendications 1 à 10,
**caractérisé en ce que**
le cordon de soudure (4) est obtenu directement dans la zone de l'élément sphérique ou sphéroïde (2).

12. Procédé conforme à l'une des revendications 1 à 11,
**caractérisé en ce que**
le cordon de soudure (4) est obtenu de façon à entourer annulairement l'élément sphérique ou sphéroïde (2).
